**Europäisches Patentamt**

**European Patent Office**

**Office européen des brevets**

(19)

(11) **EP 1 176 733 A1**

(12) **EUROPEAN PATENT APPLICATION**
published in accordance with Art. 158(3) EPC

(43) Date of publication:
**30.01.2002 Bulletin 2002/05**

(51) Int Cl.⁷: $H04B\ 1/707$, $H04B\ 7/005$, $H04B\ 7/26$

(21) Application number: **01912297.7**

(22) Date of filing: **13.03.2001**

(86) International application number:
**PCT/JP01/01945**

(87) International publication number:
**WO 01/69808 (20.09.2001 Gazette 2001/38)**

(84) Designated Contracting States:
**AT BE CH CY DE DK ES FI FR GB GR IE IT LI LU MC NL PT SE TR**

(30) Priority: **13.03.2000 JP 2000068962**

(71) Applicant: **Kawasaki Steel Corporation Kobe-shi, Hyogo 651-0075 (JP)**

(72) Inventor: **HAYASHIBARA, Izumi, KawasakiSteel Corporation Tokyo 100-0011 (JP)**

(74) Representative: **Stebbing, Timothy Charles Haseltine Lake & Co., Imperial House, 15-19 Kingsway London WC2B 6UD (GB)**

(54) **RECEIVER AND RECEIVING METHOD FOR SPREAD SPECTRUM COMMUNICATION**

(57) A radio receiver and a radio receiving method in a spread spectrum communication system are intended to estimate a transmission path model and to correct the distortion of a data signal using the transfer function of the transmission path obtained from the result of the estimation. The radio receiver comprises an equalizer for correcting the distortion of the data signal like this at the preceding stage of a demodulator. As a result, the radio receiver and the radio receiving method can prevent the fading deterioration caused by a multipath having a delay time difference within one chip time.

# FIG.1

EP 1 176 733 A1

**Description**

Technical Field

The present invention relates to a radio receiver and a radio receiving method in a communication system using a spread spectrum system.

Background Art

A spread spectrum system is a communication system for effecting modulation for spreading frequency spectrum of signals in a wide band and is advantageous in that this system can be used to achieve not only communication privacy without interference but also communications with the same frequency band held in common. Therefore, this system has now come to be widely used in channels of land mobile communications such as portable telephones, satellite communications and the like.

A CDMA (Code Division Multiple Access) system, for example, is the system based on the spread spectrum system and a communication system offering high frequency utilization efficiency wherein different spreading codes are set by different users so as to permit a plurality of users to use the same wide-band communication channel in common.

Moreover, the spread spectrum system employs a signal formed of a spread spectrum modulation signal, whereby the signal permits a relative value of signal arriving time to be accurately calculated and is also used in a GPS (Global Positioning System) capable of accurately measuring the present position of any mobile body.

In the communication system using the GPS and CDMA systems, an original signal can be restored (demodulated) by calculating a correlation between a receiving signal and a known code.

At this time, radio waves in the mobile communication are caused to generate reflection, diffraction and scattering under the influence of obstacles or reflective objects resulting from such as buildings, trees, undulations of the lay of the land and so forth. Consequently, many radio waves passed through a plurality of paths (multipath) interfere with each other and this causes the radio wave strength to greatly vary and also causes a phenomenon called fading to be generated, which results in deterioration in the signal quality to a greater extent.

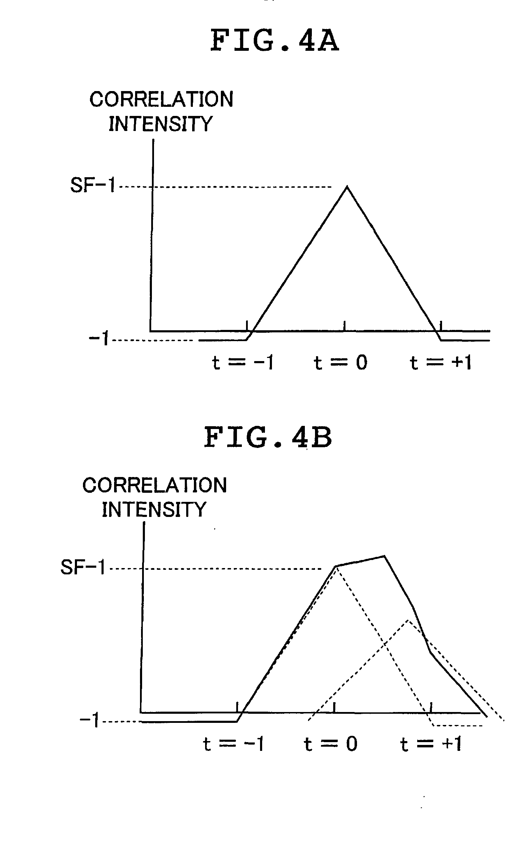

This will be explained referring to figures next. FIGs. 4A and 4B show examples of waveforms of receiving signals. The horizontal axis refers to time t, whereas the vertical axis refers to correlation intensity at the time of reception. The time unit signifies tip time expressing the speed of a spreading code. A spreading rate SF is several to several 10 or greater and as the spreading rate becomes greater, the radio wave becomes more tolerable with interference and noise. In the case of SF = 256, for example, the correlation intensity of the received signal has a maximum value of SF - 1 = 255 and a minimum value of -1, and the waveform shown in Fig. 4A may be formed.

As shown in Fig. 4A, a correlation peak appears when the signal received at certain time (t = 0) coincides with a spreading code. In case where time is shifted even by one chip time (+1 or -1), the correlation peak is lost. In case where a plurality of paths from a signal generating source such as a satellite or a base station of a portable telephone exist, the same plurality of correlation peaks are also detected when a signal propagation time difference between the paths exceeds one chip time.

In case where the signal propagation time difference between the paths is within one chip time, one correlation peak is detected in a chip time unit. In Fig. 4B, for example, correlation intensity has one peak as shown by a solid line when signals spread by the same spreading code are received from two paths as shown by the two broken lines, at t = 0 and t = 0.8.

The waveform shown in Fig. 4B occurs if signals from two different paths are received with the same phase. The signals strengthen each other and form the waveform shown therein. On the other hand, if signals are received with phases opposite to each other, the signals negate each other and the peak value becomes smaller. Further, if the paths are three or more or have continuously distribution, a waveform different from one shown in Fig. 4 is indicated. Waves that strengthen each other at an instant negate each other at the following instant like this and make the receiving level fluctuate. This phenomenon is called fading, and there are various models such as Rayleigh fading, Rician fading and so forth depending on the distribution form.

Heretofore, receiving performance deterioration due to the generation of the fading caused by the multipath has posed a serious problem and there remains a need for improving receiving talerance to fading. Actually, the signal strength normally has a base of -10dB or smaller depending on the fading period.

There is a known RAKE receiver as a receiving system for improving the characteristics of the spread spectrum communication system against the above-described multipath fading. This receiver is intended to improve the SN ratio by separating a delay wave with one or greater chip time apart as a different path, despreading each path-to-path receiving wave, demodulating the spread receiving wave and combining the resulting receiving waves in consideration of delay time. However, because the measure taken to counter the fading was only to multiply the receiving wave by the code, it is difficult to separate the multipath that has the signal propagation time difference within one chip time. Therefore, it has been impossible to improve receiving performance deterioration due to the fading caused by the multipath in which delay time is within one chip time.

On the other hand, various measures to counter fading have proposed heretofore. For example, JP-A-8-172419 discloses a transmission means wherein transmission data as the product of complex numbers is subjected to spread modulation by the use of a complex spreading code with the real part and the imaginary part of a complex number being uncorrelated and random each other; and receiving means wherein the transmission data is demodulated by a fractional space type equalizer and a waveform equalizer using a complex number type RLSM (Recursive Least Squared Method) adaptive algorithm, whereby fading resulting from code-to-code interference is removed.

Further, JP-A-11-41157 also discloses a receiving apparatus adapted to gain a path diversity effect by the use of a plurality of directional antennas that have different directivity.

However, there still exists a problem of making it difficult to prevent communication quality from being deteriorated by the fading caused by a multipath having a delay difference within one chip time even when the above-described conventional measures to counter the fading are taken.

DISCLOSURE OF THE INVENTION

An object of the present invention made in view of the foregoing conventionally raised problem is to provide a radio receiver and a radio receiving method in a spread spectrum communication system that permits preventing the fading deterioration caused by a multipath having a delay time difference within one chip time.

In order to solve the above problems, the invention provides a radio receiver in a spread spectrum system, the radio receiver includes an equalizer for estimating a transmission path model to correct the distortion of a data signal by the use of a transfer function in the transmission path obtained as a result of the estimation.

The equalizer comprises an adaptive filter based on an IIR filter, the equalizer being preferably positioned at the preceding stage of the demodulator of the radio receiver.

The equalizer will preferably operate to estimate the transmission path model using a known signal reported together with the data signal and to express the inverse function of the transfer function obtained as a result of the estimation with the IIR filter.

The equalizer will preferably operate to correct a distortion due to a delay wave within one chip time by oversampling the received data signal.

The known signal is preferably one of pilot symbol, pilot channel or preamble which are signals reported together with the data signal.

The radio receiver will preferably includes a plurality of finger circuits for demodulating the signal subjected by the equalizer to distortion correction and separated by one chip time or greater, and a maximal ratio combiner for outputting the total output of the plurality of the finger circuits.

Further, the invention provides a radio receiving method in a spread spectrum communication system, the radio receiving method including estimating a transmission path model and correcting the distortion of the received data signal by the use of the transfer function of the transmission path obtained as a result of the estimation.

In this case, the distortion of the received data signal will preferably be corrected before the demodulation of the data signal.

Further, the transmission path model will preferably be estimated by the use of the known signal reported together with the data signal.

Preferably, the known signal may be one of the pilot symbol, pilot channel and preamble which are signals reported together with the data signal.

Further, the invention provides a radio receiving method in a spread spectrum communication system, comprising the steps of calculating the transfer function of a transmission path by means of the known signal reported together with a data signal, correcting distortion due to a delay wave within one chip time of the received data signal, by the use of the transfer function, demodulating a plurality of signals that are those subjected to distortion correction and separated by one chip time or greater, combining and outputting the signals thus demodulated for outputting.

BRIEF DESCRIPTION OF THE DRAWINGS

Fig. 1 is a schematic block diagram of an embodiment of a radio receiver in a spread spectrum communication system according to the invention.

Fig. 2 is a schematic block diagram of an equalizer for performing an adapted process according to the embodiment of the invention.

Fig. 3 is a schematic block diagram of an IIR filter for use in an equalizer according to the embodiment of the invention.

Fig. 4A is a diagram descriptive of a receiving signal waveform; and Fig. 4B a diagram descriptive of the generation of fading due to a delay wave within one chip time.

BEST MODE FOR CARRYING OUT THE INVENTION

A detailed description of a radio receiver and a radio receiving method in a spread spectrum communication system according to the present invention will now be given with reference to the preferred embodiment thereof shown in the accompanying drawings.

The radio receiver according to this embodiment of the invention is a radio receiver in a communication system using the spread spectrum. In the radio receiver, an equalizer using an adaptive filter based on an IIR filter is arranged between an input terminal of the radio receiver and a demodulator for carrying out spread spectrum demodulation. For example, the equalizer operating at a clock N times greater than a chip frequency is placed between the low-pass filter (LPF) of the base band portion of the receiver and the correlator of a CDMA demodulator.

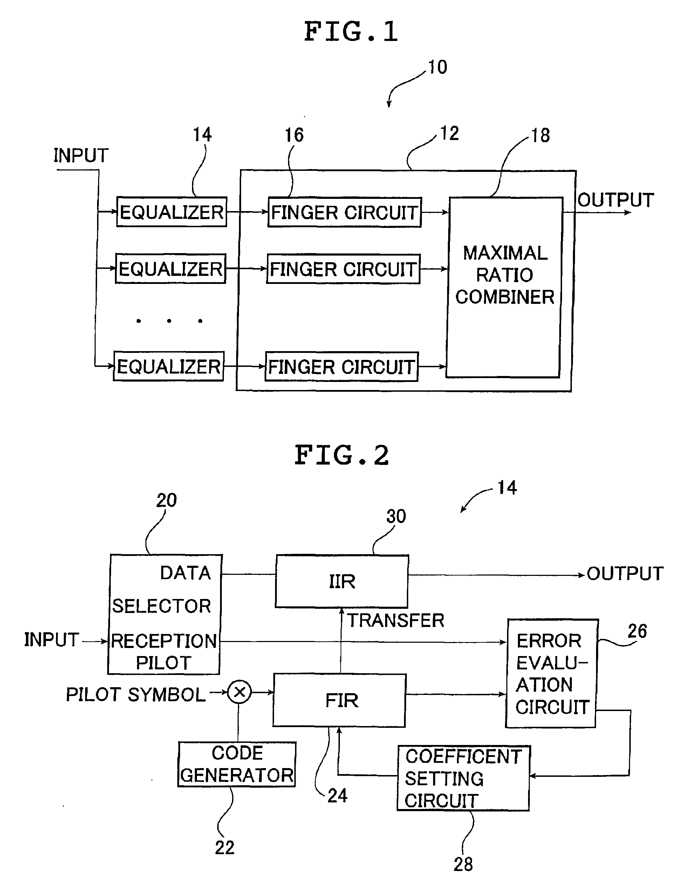

Fig. 1 is a schematic block diagram of an embodiment of a radio receiver in a spread spectrum communication system according to the invention. As shown in Fig. 1, equalizers 14 are arranged respectively between input terminals and a demodulator 12 for effecting spread spectrum demodulation in a radio receiver 10.

The demodulator 12 is a RAKE demodulator comprising a plurality of finger circuits 16 and a maximal ratio combiner 18 for combining the signals demodulated in the respective finger circuits 16 at the maximum ratio. The equalizer 14 is placed in front of each finger circuit 16. One equalizer 14 and one finger circuit 16 correspond to a receiving wave having a delay difference within one chip. The reason for a plurality of combinations of the equalizers 14 and finger circuits 16 to be arranged as shown in Fig 1 is to demodulate receiving waves with one chip or greater apart from each other.

More specifically, the delay wave within one chip time is subjected to adaptive equalizing processing in each equalizer 14 so as to extract the original signal and the extracted signal is demodulated in the finger circuit 16 further. The maximal ratio combiner 18 operates to demodulate the signal apart from one chip time or greater in the finger circuit 16 and by weighing the signal with receiving electric power indicative of the magnitude of the signal and outputs an added-up signal. In other words, a plurality of peaks are concentrated into one point of the time space and by combining the diffused power whereby to raise the SN ratio.

As described above, in the communication system using the spread spectrum, the distortion caused by the delay wave due to the multipath results in an interference and considerable deterioration of signal quality. In order to compensate the distortion, it is necessary for the system to adopt an adaptive equalizing technique. In this case, the equalizer is a filter for regenerating the original signal by correcting the distortion and important to take measures to cope with the interference caused by multipath-fading. Tolerance to such fading can be increased if the original signal is extractacted by the equalizer.

Fig. 2 is a schematic block diagram of the equalizer 14 for performing an adaptive process according to this embodiment of the invention.

The equalizer 14 according to this embodiment of the invention has the IIR filter as a basic component and comprises a selector 20, a code generator 22, a FIR filter 24, an error evaluation circuit 26, a coefficient setting circuit 28 and IIR filter 30.

The IIR filter 30 forming the principal portion of the equalizer 14 has N of taps and is operated by a clock of the N times of the chip frequency. The IIR filter 30 may extract a delay wave within one chip time by over-sampling an input signal N times.

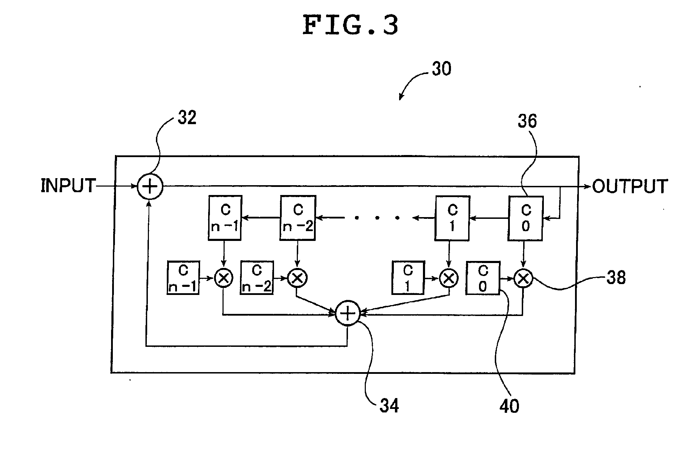

Fig. 3 is a schematic block diagram of an example of the IIR filter 30. As shown in Fig. 3, the IIR filter 30 according to this embodiment of the invention comprises adders 32 and 34, N of delay elements (flip-flops) 36, a multiplier 38 and a coefficient holding circuit 40.

The input signal $S_i$ of the equalizer 14 may be digitized. The input is a real number in the case of BPSK (Binary Phase Shift Keying) and a complex number in the case of QPSK (Quadrature Phase Shift Keying). As it is unknown how the delay wave is delayed within one chip time, for example, how the delay wave in terms of the number of them is delayed with the sampling rate as a unit, coefficients $c_0,..., c_{N-1}$ to be set in the IIR filter 30 are still left unknown. Consequently, its model is formed by the following equation (1):

In other words, the following equation (1) is established if the delay is within one chip time wherein the original signal = $S_o$, a delay operator = D, $\alpha_1,..., \alpha_N$ = a coefficient having an absolute value of 1 or less (a complex number in the case of QPSK) and an over-sampling rate = N

$$Si = (1 + \alpha1 * D + \alpha2 * D^2 +...+ \alpha N * D^N) * So \qquad (1)$$

Therefore, the equalizer 14 should only carry out a calculation expressed by the following equation (2) in order to compensate for the delay within one chip time and to restore the original signal:

$$Sout = (1 / (1 + \alpha1 * D + \alpha2 * D^2 +...+ \alpha N * D^N)) * Si \qquad (2)$$

In this case, the coefficient c0,..., cn-1 shown in Fig. 3 corresponds to a1,..., aN, respectively. In order to estimate $\alpha i$, a transmission path model is thus formed in the FIR filter 24 so as to estimate the model. A known signal is also used for the purpose.

In the spread spectrum system (or CDMA), known signals such as preamble, pilot channel, pilot symbol and the like have normally been reported. According to this embodiment of the invention, the pilot symbol to be transmitted after time-sharing with data is employed as an adaptive known signal. In this case, a known pilot symbol sequence is generated in conformity with the received pilot symbol sequence in the equalizer 14 and also spread based on the known spreading code.

In other words, the known pilot symbol is spread by the spreading code generated in the code generator 22 and the spread signal is fed into the FIR filter 24. The FIR filter 24 performs adaptive equalization as a model of transmission path and by comparing the output with the actual input signal by means of the error evaluation circuit 26, estimates the transmission path model. In the error evaluation circuit 26, the output of the FIR filter 24 is compared with the received pilot symbol sequence separated by the selector 20 from the received input signal. Further, a difference of one pilot symbol or several pilot symbols is calculated as an error.

The calculated result is fed into the coefficient setting circuit 28. The coefficient of the FIR filter 24 $\alpha$ 1,..., $\alpha N$ is set in the coefficient setting circuit 28 so that the error becomes close to zero. The coefficient $\alpha$ 1,..., $\alpha N$ is fed back to the FIR filter 24. This step is repeated to sequentially change the coefficient so that the error becomes close to zero. At this time, a sequential approximation, a RLSM (Recursive Least Squared Method) and the like are effective. When the error becomes close to zero, the transmission path model expressed by the coefficients $\alpha1$,..., $\alpha N$ in the equation (1) becomes obtainable.

Then these coefficients $\alpha1$,..., $\alpha N$ are multiplied by (-1) and the results are transferred to the IIR filter 30, whereby an inverse function is obtained. The IIR filter 30 uses the coefficients $\alpha1$,..., $\alpha N$ to extract an applicable signal from the receiving signal data output from the selector 20 and supplies the extracted signal to the demodulator 12. Thus, the data demodulation can be attained by estimating the transmission path using the pilot symbol.

More specifically, the input data are successively sent out by the delay elements 36 in the IIR filter 30 and each of the input data is multiplied by the multiplier 38 by the coefficient ci stored in each of the coefficient holding circuits 40. The data subjected to multiplication are added together and fed back. Then each data is added to new data in the adder 32 before being output.

Then the delay waves within one chip are put together into one, which is supplied to the finger circuits 16 in the demodulator 12.

In each finger circuit 16, the signal is demodulated and supplied to the maximal ratio combiner 18. In the maximal ratio combiner 18, the signals sent from the respective finger circuits 16 are weighted in accordance with their power and combined. It is thus possible to prevent the fading deterioration caused by the multipath within one chip time according to this embodiment of the invention.

Although the example above refers to the case where the data and the pilot symbol are alternately received in terms of time, the same also applies to a case where pilot channels to be output at all times are employed. Since the coefficient estimated in the FIR filter is directly transferred to the IIR filter as described above, the value is never set to diverge because the denominator in the equation (2) is prevented from approaching 0 as before.

As a result of interference, there is a case where the most intense path is not always reached first. In this case, a coefficient in a place corresponding to the intense path out of the coefficient sequence {ai} of the transmission path model only becomes greater than 1, and the general property of the model is not lost.

Although a detailed description has been given of the radio receiver and the radio receiving method in the spread spectrum communication system, the invention is not limited to the above-described embodiment but may be modified and changed in various manners without departing from the spirit and scope thereof.

Possibility of Industrial Utilization

As set forth above, it is possible to prevent the deterioration of communication quality due to the fading caused by the multipath within the chip that has heretofore been unable to be eliminated by increasing the number of sampling times within one chip time and using the adaptive filters (equalizers) operating at the sampling rate.

**Claims**

1. A radio receiver in a spread spectrum communication system, comprising:

   an equalizer for estimating a transmission path model and correcting distortion of a data signal using a transfer function of the transmission path obtained from a result of the estimation.

2. A radio receiver as claimed in claim 1, wherein the equalizer comprises an adaptive filter based on an IIR filter and is positioned at a preceding stage of a demodulator of the radio receiver.

3. A radio receiver as claimed in either claim 1 or claim 2, wherein the equalizer estimates a transmission path model by using a known signal reported together with a data signal and wherein an inverse function of the transfer function obtained from the result of the estimation is expressed in the IIR filter.

4. A radio receiver as claimed in claim 3, wherein the known signal is any one of pilot symbol, pilot channel and preamble which are signals reported together with the data signal.

5. A radio receiver as claimed in either claim 1 or claim 2, wherein the equalizer corrects distortion due to a delay wave within one chip time by over-sampling the received data signal.

6. A radio receiver as claimed in claim 5, further comprising a plurality of finger circuits for demodulating the signal subjected to distortion correction by the equalizer and separated by one chip time or greater from an adjoining signal, and a maximal ratio combiner for outputting the added-up outputs of the plurality of finger circuits.

7. A radio receiving method in a spread spectrum communication system, comprising the steps of:

   estimating a transmission path model; and
   correcting distortion of a received data signal, by using a transfer function of the transmission path obtained from a result of the estimation.

8. A radio receiving method as claimed in claim 7, wherein the distortion of the data signal is corrected before demodulating the data signal.

9. A radio receiving method as claimed in either claim 7 or claim 8, wherein the transmission path model is estimated by using a known signal reported together with the data signal.

10. A radio receiving method as claimed in claim 9, wherein the known signal is any one of pilot symbol, pilot channel and preamble which are signals reported together with the data signal.

11. A radio receiving method in a spread spectrum communication system, comprising the steps of:

   calculating a transfer function of a transmission path by using a known signal reported together with a data signal,
   correcting distortion resulting from a delay wave within one chip time of the received data signal, by using the transfer function, and
   demodulating, combining and outputting a plurality of signals subjected to the distortion correction and separated by one chip time or greater from each other.

# FIG.1

# FIG.2

# FIG.3

# FIG.4A

# FIG.4B

# INTERNATIONAL SEARCH REPORT

| | International application No. |
|---|---|
| | PCT/JP01/01945 |

**A. CLASSIFICATION OF SUBJECT MATTER**
Int.Cl⁷  H04B1/707, H04B7/005, H4B7/26

According to International Patent Classification (IPC) or to both national classification and IPC

**B. FIELDS SEARCHED**

Minimum documentation searched (classification system followed by classification symbols)
Int.Cl⁷  H04BI/69-1/713, H04J13/00-13/06,
         H04B7/005, H04B7/26

Documentation searched other than minimum documentation to the extent that such documents are included in the fields searched
Jitsuyo Shinan Koho        1926-1996    Toroku Jitsuyo Shinan Koho 1994-2001
Kokai Jitsuyo Shinan Koho  1971-2001    Jitsuyo Shinan Toroku Koho 1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 11-266232, 1 (Motorola, Inc.),<br>28 September, 1999 (28.09.99),<br>Full text; Fig. 1<br>& DE, 19860094, A1   & FR, 2773290, A1<br>& GB, 2333422, A    & CN, 1230059, A<br>& BR, 9806431, A     & KR, 99063551, A<br>& US, 6175588, A | 1-10<br>11 |
| X<br>Y<br>A | JP, 10-200503, A (Matsushita Electric Industrial Co.,<br>Ltd.),<br>31 July, 1998 (31.07.98),<br>Full text; all drawings   (Family: none) | 1,5,7-10<br>11<br>2-4,6 |
| Y | JP, 9-74372, 1 (Matsushita Electric Industrial Co.,<br>Ltd.),<br>18 March, 1997 (18.03.97),<br>page 3, column, 3, line 25 to page 5, column 8, line 11;<br>Fig. 1<br>& WO, 97/09793, A1   & EP, 790711, A1<br>& KR, 97707646, A    & US, 6128333, A | 11 |
| P,X | JP, 2000-138656, A (NEC Corporation), | 1-11 |

| ☒ Further documents are listed in the continuation of Box C. | ☐ See patent family annex. |
|---|---|

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 May, 2001 (23.05.01) | 05 June, 2001 (05.06.01) |

| Name and mailing address of the ISA/<br>Japanese Patent Office | Authorized officer |
|---|---|
| Facsimile No. | Telephone No. |

Form PCT/ISA/210 (second sheet) (July 1992)

**INTERNATIONAL SEARCH REPORT**

International application No.

PCT/JP01/01945

| C (Continuation). DOCUMENTS CONSIDERED TO BE RELEVANT | | |
|---|---|---|
| Category* | Citation of document, with indication, where appropriate, of the relevant passages | Relevant to claim No. |
| | 16 May, 2000 (16.05.00),<br>Full text; all drawings<br>& WO, 00/27042, A1 | |

Form PCT/ISA/210 (continuation of second sheet) (July 1992)